(19) Europäisches Patentamt
European Patent Office
Office européen des brevets

(11) EP 0 764 291 B1

(12) EUROPÄISCHE PATENTSCHRIFT

(45) Veröffentlichungstag und Bekanntmachung des Hinweises auf die Patenterteilung:
**07.01.1998 Patentblatt 1998/02**

(21) Anmeldenummer: **95920865.3**

(22) Anmeldetag: **23.05.1995**

(51) Int Cl.$^6$: **G03G 9/09**, C09B 29/42

(86) Internationale Anmeldenummer:
**PCT/EP95/01952**

(87) Internationale Veröffentlichungsnummer:
**WO 95/34846 (21.12.1995 Gazette 1995/54)**

(54) **FARBTONER FÜR DIE ELEKTROPHOTOGRAPHIE**

ELECTROPHOTOGRAPHIC TONER

TONER ELECTROPHOTOGRAPHIQUE

(84) Benannte Vertragsstaaten:
**BE CH DE FR GB IT LI NL**

(30) Priorität: **10.06.1994 DE 4420280**

(43) Veröffentlichungstag der Anmeldung:
**26.03.1997 Patentblatt 1997/13**

(73) Patentinhaber: **BASF AKTIENGESELLSCHAFT**
**67056 Ludwigshafen (DE)**

(72) Erfinder:
- **DYLLICK-BRENZINGER, Rainer**
  **D-69469 Weinheim (DE)**
- **GARCIA ESPINO, Andres, Carlos**
  **D-67133 Maxdorf (DE)**
- **BECK, Karin, Heidrun**
  **D-67067 Ludwigshafen (DE)**

(56) Entgegenhaltungen:
**EP-A- 0 066 153**
**EP-A- 0 068 186**
**EP-A- 0 314 002**
**EP-A- 0 385 330**
**WO-A-95/00885**
**CH-A- 642 095**
**DE-A- 2 628 409**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 764 291 B1

Printed by Jouve, 75001 PARIS (FR)

## Beschreibung

Die vorliegende Erfindung betrifft neue Farbtoner für die Elektrophotographie, enthaltend ein polymeres Bindemittel und ein Farbmittel der Formel I und/oder II

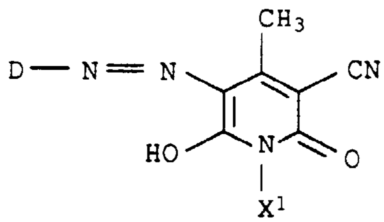

(I)

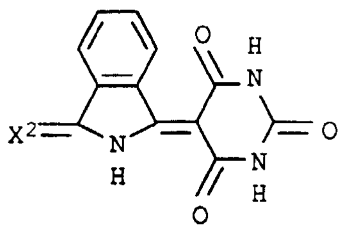

(II),

worin

D einen Rest der Formel

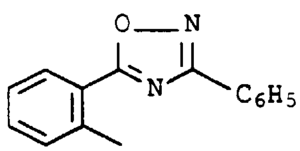

oder

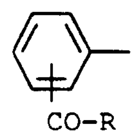

,

wobei R für $C_1$-$C_{13}$-Alkylamino, Phenyl, das ein- oder zweifach durch $C_1$-$C_4$-Alkyl substituiert ist, oder Phenoxy-$C_2$-$C_4$-alkoxy steht,

$X^1$ Wasserstoff, $C_1$-$C_6$-Alkyl oder einen Rest der Formel

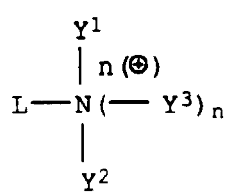

$nAn^{\ominus}$

in der L für $C_1$-$C_6$-Alkylen, n für 0 oder 1, $Y^1$, $Y^2$ und $Y^3$ unabhängig voneinander jeweils für Wasserstoff oder $C_1$-$C_6$-Alkyl und $An^{\ominus}$ für das Äquivalent eines Anions stehen, und

$X^2$ Sauerstoff oder den Rest der Formel

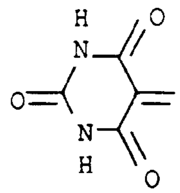

bedeuten.

Es existieren zwei Möglichkeiten zur Entwicklung latenter elektrostatischer Bilder, die auf elektrophotographischem, lichtempfindlichem Material oder elektrostatischem Aufzeichnungsmaterial gebildet werden, von denen das eine einen Flüssigkeitsentwickler und das andere einen Trockenentwickler, z.B. einen Einkomponenten-Toner mit einem in einem Bindemittelharz dispergierten Farbmittel, oder einen Zweikomponenten-Toner, der eine Mischung aus dem Einkomponenten-Toner mit einem festen Träger umfaßt, verwendet.

Im allgemeinen wird ein Zweikomponenten-Toner durch Mischen eines Farbmittels mit einem Bindemittel, Kneten der erhaltenen Mischung in geschmolzenem Zustand und Pulverisieren der gekneteten Mischung, z.B. in einer Gegenstrahlmühle, auf eine Teilchengröße von ungefähr 1 bis 30 μm hergestellt. Dieser Rohtoner wird anschließend noch gesichtet, wobei die Fraktion, die eine Teilchengröße von ca. 5 bis 15 μm aufweist, weiterverwendet wird. Der so erhaltene Toner wird mit einem Trägermaterial, das eine Teilchengröße von ungefähr 50 bis 100 μm aufweist, vermischt, wodurch man zu einem Entwickler gelangt, der sich zur Entwicklung eines latenten elektrostatischen Bildes eignet.

Als Farbmittel für die Herstellung von Farbtoner kommen Farbstoffe oder Pigmente in Betracht. So beschreibt die US-A-4 734 349 die Anwendung von speziellen Phenylazohydroxypyridonen für diesen Zweck. Weiterhin ist u.a. auch aus der DE-A-4 217 973 die Anwendung von solchen Farbstoffen bekannt.

Es hat sich gezeigt, daß Farbtoner, die solche Farbstoffe als Farbmittel enthalten, unzureichende anwendungstechnische Eigenschaften aufweisen.

Aufgabe der vorliegenden Erfindung war es daher, neue Farbtoner für die Elektrophotographie bereitzustellen, die über ein vorteilhaftes anwendungstechnisches Eigenschaftsprofil verfügen. Insbesondere sollten sie gelbe Farbmittel enthalten und hochtransparente Drucke liefern, so daß sie z.B. zur Anwendung in Overhead-Projektionsfolien und auch zur Herstellung von brillanten, hochwertigen Drucken geeignet sind.

Demgemäß wurden die eingangs näher bezeichneten Farbtoner gefunden.

Alle in der obengenannten Formel I auftretenden Alkyl- und Alkylenreste können sowohl geradkettig als auch verzweigt sein.

Reste R sind z.B. Methylamino, Ethylamino, Propylamino, Isopropylamino, Butylamino, Isobutylamino, sec-Butylamino, Pentylamino, Isopentylamino, Neopentylamino, tert-Pentylamino, Hexylamino, 2-Methylpentylamino, Heptylamino, Octylamino, 2-Ethylhexylamino, Isooctylamino, Nonylamino, Isononylamino, Decylamino, Isodecylamino, Undecylamino, Dodecylamino, Tridecylamino, 3,5,5,7-Tetramethylnonylamino, Isotridecylamino (die obigen Bezeichnungen Isooctyl, Isononyl, Isodecyl und Isotridecyl sind Trivialbezeichnungen und stammen von den nach der Oxosynthese erhaltenen Alkoholen - vgl. dazu Ullmann's Encyclopedia of Industrial Chemistry, 5th Edition, Vol. A1, Seiten 290 bis 293, sowie Vol. A 10, Seiten 284 und 285), 2-, 3- oder 4-Methylphenyl, 2-, 3- oder 4-Ethylphenyl, 2-, 3- oder 4-Propylphenyl, 2-, 3- oder 4-Isopropylphenyl, 2-, 3- oder 4-Butylphenyl, 2,4-Dimethylphenyl, 2,6-Dimethylphenyl, 2,4-Diethylphenyl, 2,6-Diethylphenyl, 2-Phenoxyethoxy, 2- oder 3-Phenoxypropoxy oder 2- oder 4-Phenoxybutoxy.

Reste $X^1$, $Y^1$, $Y^2$ und $Y^3$ sind z.B. Methyl, Ethyl, Propyl, Isopropyl, Butyl, Isobutyl, sec-Butyl, Pentyl, Isopentyl, Neopentyl, tert-Pentyl, Hexyl oder 2-Methylpentyl.

Reste L sind z.B. $-CH_2-$, $-(CH_2)_2-$, $-(CH_2)_3-$, $-(CH_2)_4-$, $-(CH_2)_5-$, $-(CH_2)_6-$, $-CH(CH_3)-CH_2-$ oder $-CH(CH_3)-CH(CH_3)-$.

Geeignete Anionen, von denen sich das Äquivalent $An^{\ominus}$ ableitet, sind anorganische oder organische Anionen, beispielsweise Halogenid, wie Fluorid, Chlorid, Bromid oder Iodid, Hydrogensulfat, Sulfat, Hydrogenphosphat, Phosphat, Borat, Tetrafluoroborat, Trichlorozinkat, Methosulfat, Ethosulfat, Benzolsulfonat, o- oder p-Toluolsulfonat, Methansulfonat, Formiat, Acetat, Propionat oder Hydroxyacetat.

Bevorzugt sind solche Farbtoner, die als Farbmittel einen Farbstoff der Formel Ia

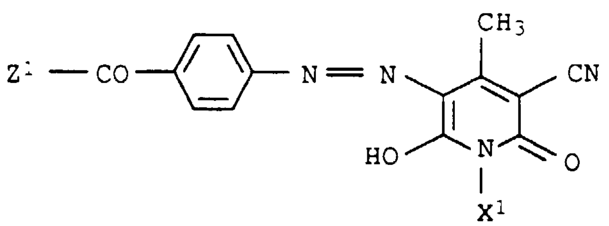

(Ia)

enthalten, in der $Z^1$ $C_1$-$C_{13}$-Alkylamino bedeutet und $X^1$ die obengenannte Bedeutung besitzt, wobei solche Farbstoffe der Formel Ia, in der $Z^1$ $C_4$-$C_{10}$-Alkylamino, insbesondere $C_8$-Alkylamino und $X^1$ $C_1$-$C_4$-Alkyl, insbesondere Methyl, bedeuten, besonders hervorzuheben sind.

Weiterhin bevorzugt sind solche Farbtoner,die als Farbmittel einen Farbstoff der Formel Ib

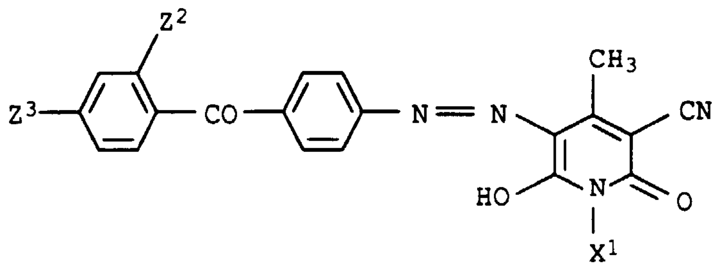

(Ib)

enthalten, worin $Z^2$ Wasserstoff oder $C_1$-$C_4$-Alkyl und $Z^3$ $C_1$-$C_4$-Alkyl bedeuten und $X^1$ die obengenannte Bedeutung besitzt, wobei solche Farbstoffe der Formel Ib, in der $Z^2$ und $Z^3$ jeweils Methyl und $X^1$ $C_1$-$C_6$-Alkyl, insbesondere $C_4$-Alkyl, bedeuten, besonders hervorzuheben sind.

Weiterhin bevorzugt sind solche Farbtoner, die als Farbmittel einen Farbstoff der Formel Ic

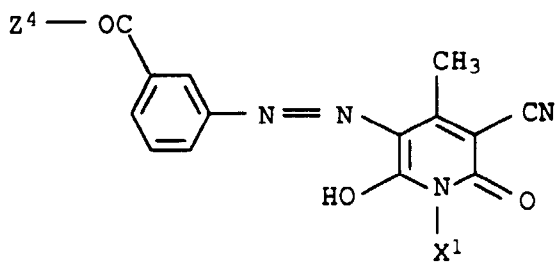

(Ic)

enthalten, worin $Z^4$ Phenoxy-$C_2$-$C_4$-alkoxy bedeutet und $X^1$ die obengenannte Bedeutung besitzt, wobei solche Farbstoffe der Formel Ic, in der $Z^4$ 2-Phenoxyethoxy und $X^1$ $C_1$-$C_6$-Alkyl, insbesondere Methyl, bedeuten, besonders hervorzuheben sind.

Weiterhin bevorzugt sind solche Farbtoner, die als Farbmittel die Komponente der Formel Id oder eine Mischung der Komponenten der Formeln Id und Ie

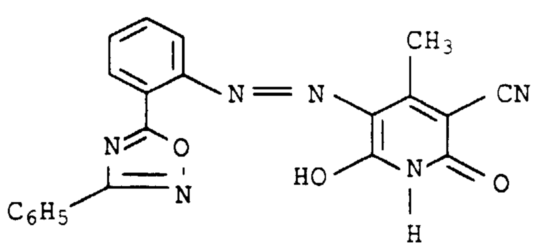

(Id),

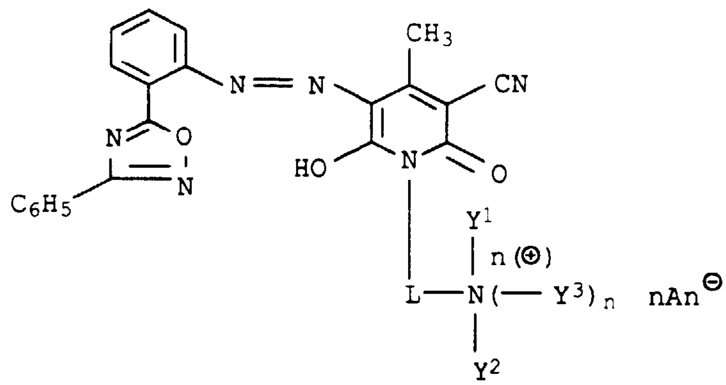

(Ie)

enthalten, worin $An^{\ominus}$ die obengenannte Bedeutung besitzt, n für 0 oder 1 und L für $C_2$-$C_4$-Alkylen, insbesondere $C_3$-Alkylen stehen, wobei, wenn n 0 ist, $Y^1$ Wasserstoff und $Y^2$ $C_1$-$C_6$-Alkyl, insbesondere $C_6$-Alkyl, und wenn n 1 ist, $Y^1$, $Y^2$ und $Y^3$ unabhängig voneinander jeweils $C_1$-$C_4$-Alkyl, insbesondere Methyl bedeuten.

Weiterhin bevorzugt sind solche Farbtoner, die als Farbmittel ein Pigment der Formel IIa oder eine Mischung der Pigmente der Formeln IIa und IIb

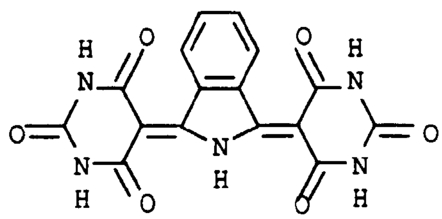

(IIa),

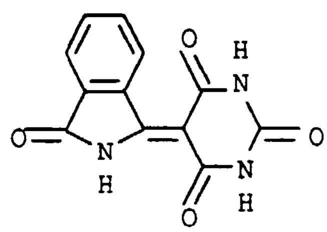

(IIb)

enthalten.

Bei den Farbmitteln der Formeln I und II handelt es sich um an sich bekannte Verbindungen.

Farbstoffe der Formel I, in der D einen Rest der Formel

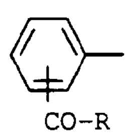

bedeutet, sind z.B. in der DE-A-2 157 229 sowie EP-A-314 002 beschrieben.

Farbmittel der Formel I, in der D einen Rest der Formel

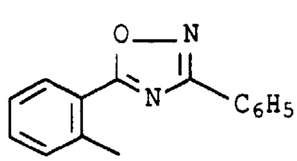

bedeutet, sind z.B. aus der DE-A-2 457 687 oder EP-A-385 330 bekannt.

Farbmittel der Formel II sind z.B. aus der DE-A-2 628 409 bekannt.

Die in den neuen Farbtonern enthaltenen polymeren Bindemittel sind an sich bekannt. Sie sind in der Regel thermoplastisch und weisen eine Glasumwandlungstemperatur ($T_G$) von 50 bis 80°C auf. Beispiele für polymere Bindemittel sind Polystyrol, Copolymere von Styrol mit einem Acrylat oder Methacrylat, Copolymere von Styrol mit Butadien und/oder Acrylnitril, Polyacrylate, Polymethacrylate, Copolymere eines Acrylats oder Methacrylats mit Vinylchlorid oder Vinylacetat, Polyvinylchlorid, Copolymere von Vinylchlorid mit Vinylidenchlorid, Copolymere von Vinylchlorid mit Vinylacetat, lineare, verzweigte oder vernetzte Polyesterharze, Epoxyharze, Polyamide, Polyurethane oder Mischungen dieser Stoffe.

Vorzugsweise verwendet man lineares oder teilvernetztes gesättigtes Polyesterharz, Styrol-Butylacrylat- oder Styrol-Methacrylatharze, die vernetzt sein können oder Styrol-Butadienharze.

Bezogen auf das Gewicht des polymeren Bindemittels kommen in der Regel 0,1 bis 10 Gew.-%, vorzugsweise 2 bis 8 Gew.-%, an Farbmittel zur Anwendung.

Als weitere Bestandteile können die erfindungsgemäßen Farbtoner z.B. noch intern wirkende ladungsstabilisierende Mittel, wie Metallsalze von Salicylsäure, Weichmacher, wie Dibutyl- oder Dioctylphthalat, Widerstands-Modifizierungsmittel, wie Zinnoxid, Bleioxid, Antimonoxid oder Molybdänoxid, Wachse, wie Carnaubawachs, chloriertes Paraffin, Polypropylen oder Polyethylen, magnetisches Material, wie Eisen, Nickel, Chromoxid, Eisenoxid oder ein Ferrit der Formel $MeFe_2O_4$, worin Me ein zweiwertiges Metall, z.B. Eisen, Kobalt, Zink, Nickel oder Mangan, darstellt, Fluidisierungsmittel, wie Aerosile, oder extern wirkende (d.h. auf der Oberfläche des Farbtoners befindliche) Ladungsstabilisatoren, wie feinteilige Metalloxide, enthalten.

Die Herstellung der erfindungsgemäßen Toner erfolgt nach üblichen Verfahren, z.B. durch Vermischen der Bestandteile in einem Kneter und anschließendes Pulverisieren oder durch Schmelzen des polymeren Bindemittels oder eines Gemisches der polymeren Bindemittel, anschließende feine Zerteilung der anderen Zusätze in dem geschmolzenen Harz unter Anwendung der für diesen Zweck bekannten Misch- und Knetmaschinen, anschließende Abkühlung der Schmelze zu einer festen Masse und schließlich Vermahlen der festen Masse zu Teilchen der gewünschten Teilchengröße (in der Regel 0,1 bis 50 µm). Es ist auch möglich, das polymere Bindemittel und den Ladungsstabilisator in einem gemeinsamen Lösungsmittel zu suspendieren und die anderen Zusätze in die Suspension zu geben. Die Suspension kann so als Flüssigtoner verwendet werden.

Man kann die Flüssigkeit aber auch in an sich bekannter Weise sprühtrocknen, die Lösungsmittel abdampfen oder die Flüssigkeit gefriertrocknen und den festen Rückstand zu Teilchen der gewünschten Teilchengröße vermahlen.

Die Farbmittel können auch in den Monomeren gelöst oder dispergiert und anschließend einer Emulsionspolymerisation unterworfen werden, wie in der US-A-5 278 020 beschrieben.

Der erfindungsgemäße Farbtoner zeichnet sich durch hohe Brillanz und hohe Farbstärke aus, insbesondere ergeben sie hochtransparente Drucke, was sie für die Herstellung von Overhead-Projektionsfolien und hochwertigen Drucken besonders geeignet macht.

Die folgenden Beispiele sollen die Erfindung näher erläutern.

Beispiel 1

120 g eines linearen Polyesterharzes das unter dem Namen Atlac® Spar II (Fa. Reichhold Chemicals) handelsüblich ist, wurden in einem Meßkneter bei ca. 105°C Innentemperatur weichgeknetet und mit 80 g des Farbstoffs der Formel

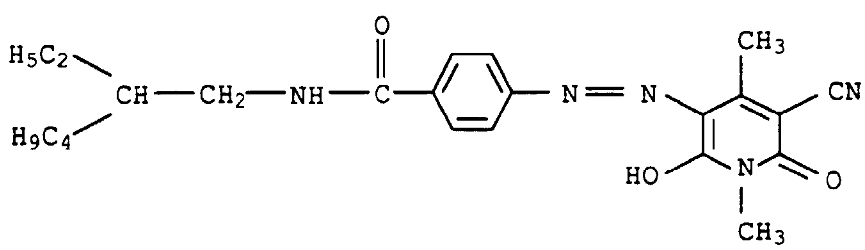

innerhalb von 60 min vermischt. Die Feinverteilung wurde mit einem Mikroskop bei 750-facher Vergrößerung beurteilt. Die Innentemperatur wurde kontinuierlich abgesenkt um die Scherwirkung der Schaufeln zu erhöhen. Nach ca. 45 min war eine hervorragende Feinverteilung erreicht. Mit sichtbarer Mikroskopie ließen sich keinerlei Agglomerate mehr nachweisen.

Die Mischung wurde abgekühlt und im Kneter zerkleinert. Ein Teil dieser 40 gew.-%igen Präparation wurde im

Kneter mit dem obengenannten Polyesterharz auf eine Konzentration von 3 Gew.-% verdünnt und diese Präparation auf Transparenz untersucht. Hierzu wurde eine kleine Menge zwischen zwei Glasplatten durch kurzzeitiges Kontaktieren mit einer Koflerbank bei 230°C zu einer dünnen Scheibe geschmolzen. Zur Transparenzprüfung lassen sich Messungen in einem Spektrometer heranziehen, in dessen Vergleichsstrahl vergleichbare Glasplatten gestellt werden. Man kann aber auch visuell abmustern, indem man die Platten auf eine schwarz-weiße Unterlage legt (Kontrastkarton) und ähnlich der DIN 53162 verfährt.

Die Transparenz wird nach der letztgenannten Methode relativ zu einem Standard bestimmt. Für diese Untersuchungen wurde dieses Beispiel als Standard definiert, da es von allen Beispielen die höchste Transparenz hatte.

Beispiel 2

Man verfuhr analog Beispiel 1, verwendete jedoch 60 g des Farbmittels

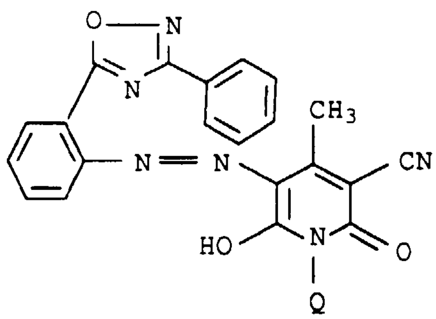

(Q = H 95 Gew.-%, $(CH_2)_3NHC_6H_{11}$ 5 Gew.-%)

Die Prüfung auf Transparenz ergab eine geringfügig schlechtere Transparenz als bei der Probe des Beispiels 1.

Beispiel 3

Man verfuhr analog Beispiel 1, verwendete jedoch 80 g des Pigments der Formel

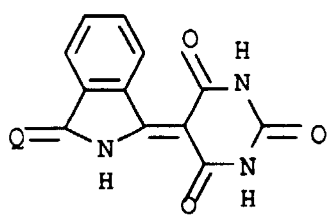

Q =

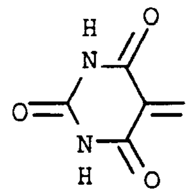

,

das noch geringe Mengen des Produkts mit Q = Sauerstoff enthielt.

Die Prüfung auf Transparenz ergab eine deutlich schlechtere Transparenz als bei der Probe des Beispiels 1.

Beispiel 4

Man verfuhr analog Beispiel 1, verwendete jedoch 80 g des Farbstoffs der Formel

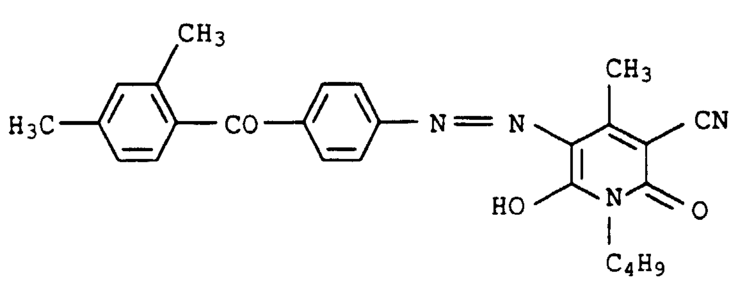

Die Prüfung auf Transparenz ergab eine praktisch gleichgute Transparenz wie bei der Probe des Beispiels 1, allerdings konnte eine höhere Farbstärke erzielt werden.

Beispiel 5

Man verfuhr analog Beispiel 1, verwendete jedoch 80 g des Farbstoffs der Formel

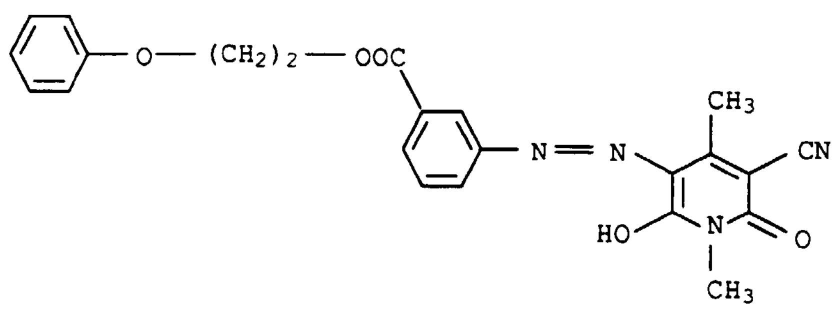

Die Prüfung auf Transparenz ergab eine praktisch gleichgute Transparenz wie bei der Probe des Beispiels 1.

**Patentansprüche**

1. Farbtoner für die Elektrophotographie, enthaltend ein polymeres Bindemittel und ein Farbmittel der Formel I und/ oder II

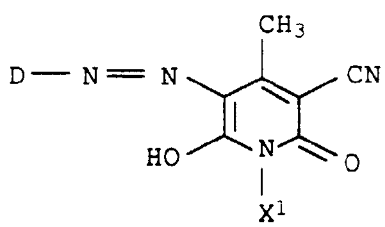 (I)

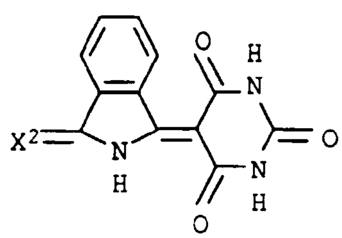 (II),

worin

D einen Rest der Formel

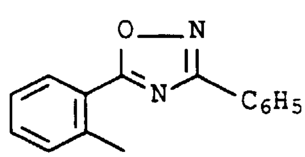 oder 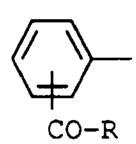 ,

wobei R für $C_1$-$C_{13}$-Alkylamino, Phenyl, das ein- oder zweifach durch $C_1$-$C_4$-Alkyl substituiert ist, oder Phenoxy-$C_2$-$C_4$-alkoxy steht,

$X^1$ Wasserstoff, $C_1$-$C_6$-Alkyl oder einen Rest der Formel

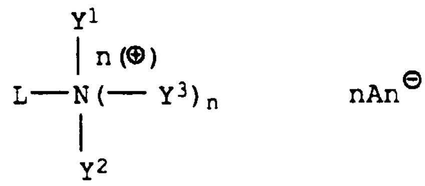

in der L für $C_1$-$C_6$-Alkylen, n für 0 oder 1, $Y^1$, $Y^2$ und $Y^3$ unabhängig voneinander jeweils für Wasserstoff oder $C_1$-$C_6$-Alkyl und $An^{\ominus}$ für das Äquivalent eines Anions stehen, und

$X^2$ Sauerstoff oder den Rest der Formel

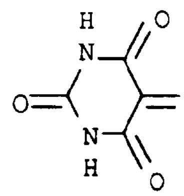

bedeuten.

**2.** Farbtoner nach Anspruch 1, dadurch gekennzeichnet, daß sie als Farbmittel einen Farbstoff der Formel Ia

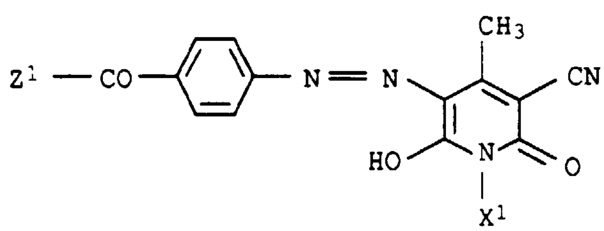

(Ia)

enthalten, in der $Z^1$ $C_1$-$C_{13}$-Alkylamino bedeutet und $X^1$ die in Anspruch 1 genannte Bedeutung besitzt.

**3.** Farbtoner nach Anspruch 1, dadurch gekennzeichnet, daß sie als Farbmittel einen Farbstoff der Formel Ib

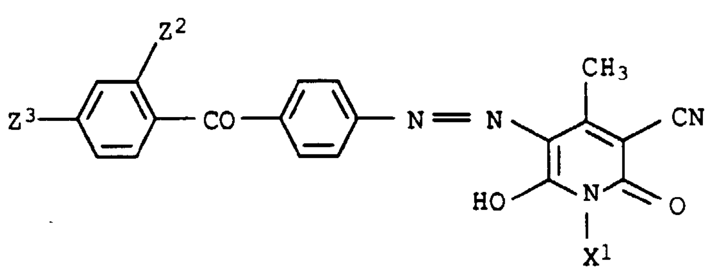

(Ib)

enthalten, worin $Z^2$ Wasserstoff oder $C_1$-$C_4$-Alkyl und $Z^3$ $C_1$-$C_4$-Alkyl bedeuten und $X^1$ die in Anspruch 1 genannte Bedeutung besitzt.

**4.** Farbtoner nach Anspruch 1, dadurch gekennzeichnet, daß sie als Farbmittel einen Farbstoff der Formel Ic

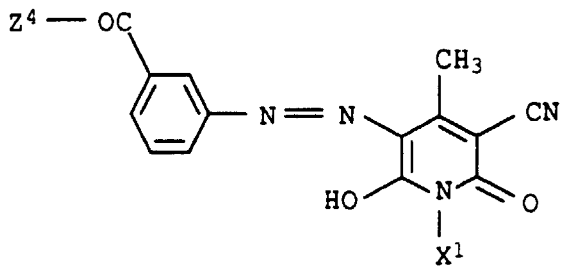

(Ic)

enthalten, worin $Z^4$ Phenoxy-$C_2$-$C_4$-alkoxy bedeutet und $X^1$ die in Anspruch 1 genannte Bedeutung besitzt.

**5.** Farbtoner nach Anspruch 1, dadurch gekennzeichnet, daß sie als Farbmittel eine Komponente der Formel Id oder eine Mischung der Komponenten der Formeln Id und Ie

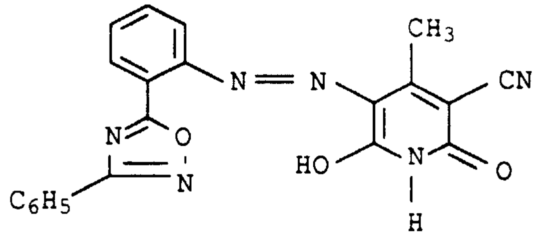

(Id),

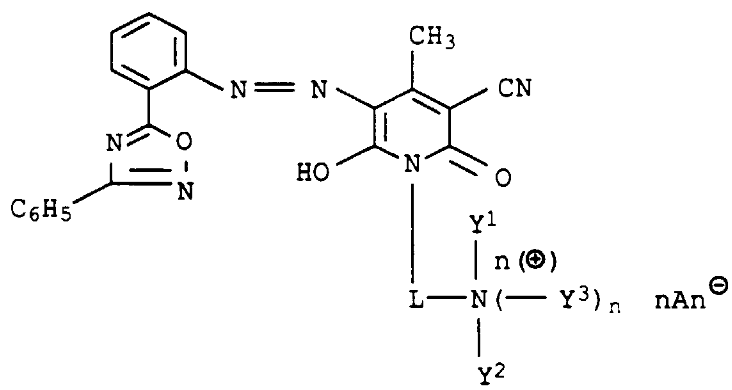

(Ie)

enthalten, worin $An^{\ominus}$ die in Anspruch 1 genannte Bedeutung besitzt, n für 0 oder 1 und L für $C_2$-$C_4$-Alkylen stehen, wobei, wenn n 0 ist, $Y^1$ Wasserstoff und $Y^2$ $C_1$-$C_6$-Alkyl und wenn n 1 ist, $Y^1$, $Y^2$ und $Y^3$ unabhängig voneinander jeweils $C_1$-$C_4$-Alkyl bedeuten.

**6.** Farbtoner nach Anspruch 1, dadurch gekennzeichnet, daß sie als Farbmittel ein Pigment der Formel IIa oder eine Mischung der Pigmente der Formeln IIa und IIb

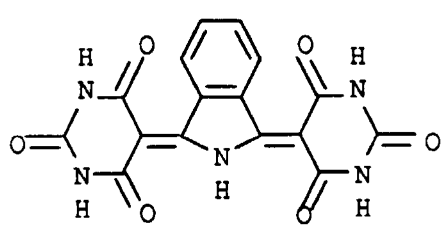

(IIa),

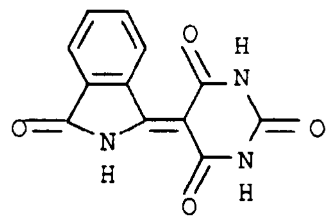

(IIb)

enthalten.

7. Farbtoner nach Anspruch 1, dadurch gekennzeichnet, daß sie, bezogen auf das Gewicht des polymeren Bindemittels 0,1 bis 10 Gew.-% Farbmittel aufweisen.

**Claims**

1. A color toner for electrophotography, containing a polymeric binder and a colorant of the formula I or II

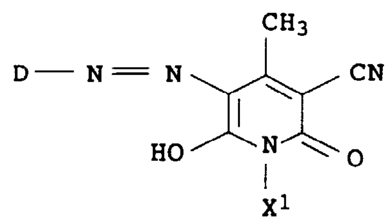

(I)

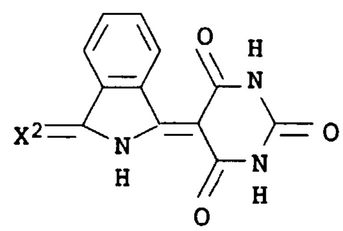

(II),

where

D is a radical of the formula

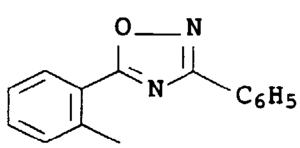

or

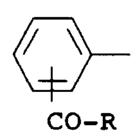

,

where R is $C_1$-$C_{13}$-alkylamino or is phenyl which is monosubstituted or disubstituted by $C_1$-$C_4$-alkyl or is phenoxy-$C_2$-$C_4$-alkoxy,

$X^1$ is hydrogen, $C_1$-$C_6$-alkyl or a radical of the formula

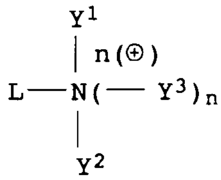 $nAn^{\ominus}$

where L is $C_1$-$C_6$-alkylene, n is 0 or 1, $Y^1$, $Y^2$ and $Y^3$ independently of one another are each hydrogen or $C_1$-$C_6$-alkyl and $An^{\ominus}$ is one equivalent of an anion, and

$X^2$ is oxygen or the radical of the formula

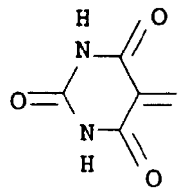 .

**2.** A color toner as claimed in claim 1, which contains, as a colorant, a dye of the formula Ia

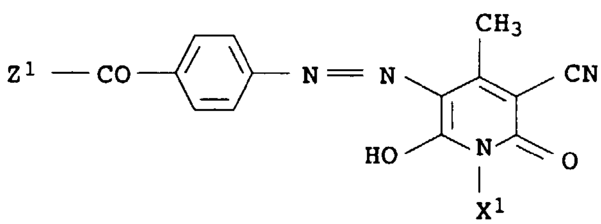 (Ia)

where $Z^1$ is $C_1$-$C_{13}$-alkylamino and $X^1$ has the meanings stated in claim 1.

**3.** A color toner as claimed in claim 1, which contains, as a colorant, a dye of the formula Ib

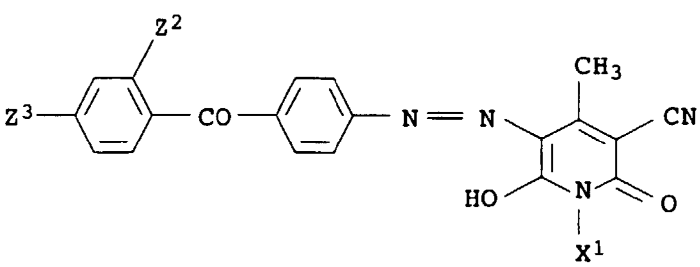 (Ib)

where $Z^2$ is hydrogen or $C_1$-$C_4$-alkyl, $Z^3$ is $C_1$-$C_4$-alkyl and $X^1$ has the meanings stated in claim 1.

**4.** A color toner as claimed in claim 1, which contains, as a colorant, a dye of the formula Ic

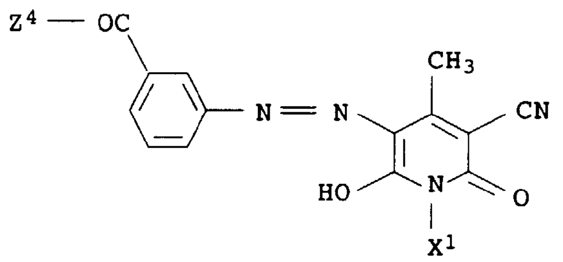 (Ic)

where $Z^4$ is phenoxy-$C_2$-$C_4$-alkoxy and $X^1$ has the meanings stated in claim 1.

**5.** A color toner as claimed in claim 1, which contains, as a colorant, a component of the formula Id or a mixture of components of the formulae Id and Ie

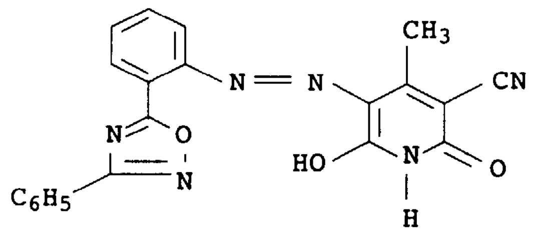 (Id),

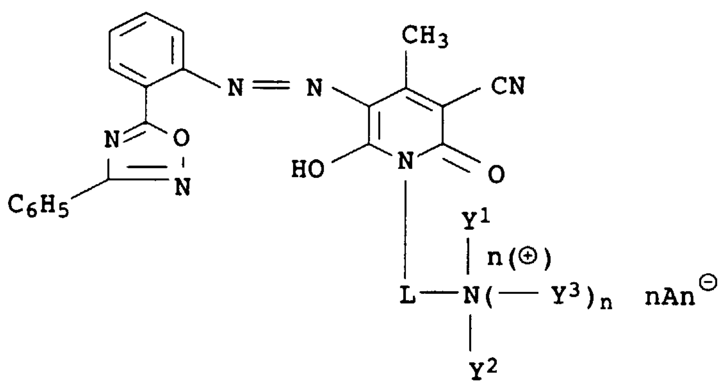 (Ie)

where $An^{\ominus}$ has the meanings stated in claim 1, n is 0 or 1 and L is $C_2$-$C_4$-alkylene, and, if n is 0, $Y^1$ is hydrogen and $Y^2$ is $C_1$-$C_6$-alkyl, and, if n is 1, $Y^1$, $Y^2$ and $Y^3$ independently of one another are each $C_1$-$C_4$-alkyl.

**6.** A color toner as claimed in claim 1, which contains, as a colorant, a pigment of the formula IIa or a mixture of pigments of the formulae IIa and IIb

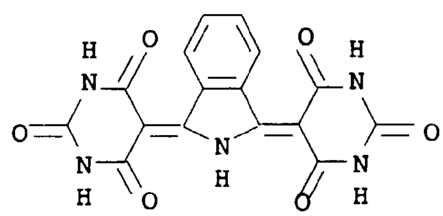 (IIa),

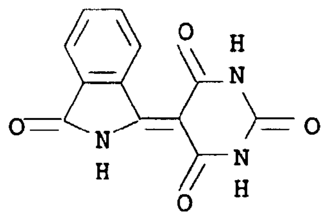

(IIb) .

**7.** A color toner as claimed in claim 1, which contains from 0.1 to 10 % by weight, based on the weight of the polymeric binder, of colorants.

**Revendications**

**1.** Toners pour l'électrophotographie contenant un liant polymère et un agent colorant de formule I et/ou II

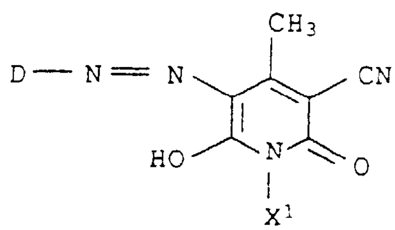

(I)

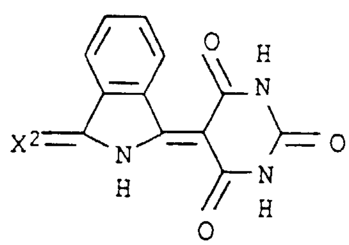

(II),

où

D est mis pour un reste de formule

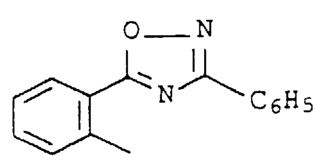

ou

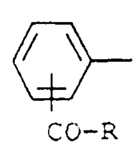

où R est mis pour un groupement alkyl(en $C_1$-$C_{13}$)amino, phényle, substitué une ou deux fois par un groupement alkyle en $C_1$-$C_4$, ou phénoxyalcoxy(en $C_2$-$C_4$),

$X^1$ est mis pour un atome d'hydrogène, un groupement alkyle en $C_1$-$C_6$ ou un reste de formule

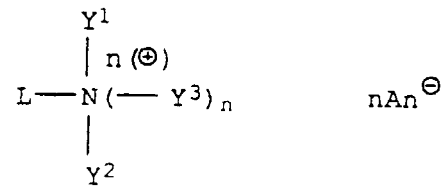

dans laquelle L est mis pour un groupement alkylène en $C_1$-$C_6$, n vaut 0 ou 1, $Y^1$, $Y^2$ et $Y^3$ sont mis chacun, indépendamment les uns des autres, pour un atome d'hydrogène ou un groupement alkyle en $C_1$-$C_6$ et $An^{\ominus}$ est mis pour l'équivalent d'un anion, et

$X^2$ est mis pour un atome d'oxygène ou pour le reste de formule

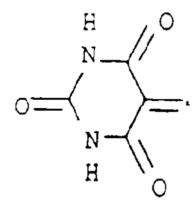

**2.** Toners selon la revendication 1, caractérisés en ce qu'ils contiennent, en tant qu'agent colorant, un colorant de formule Ia

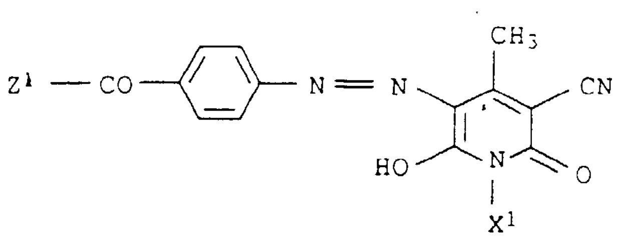

(Ia)

dans laquelle $Z^1$ représente un groupement alkyl(en $C_1$-$C_{13}$)amino et $X^1$ prend la signification donnée dans la revendication 1.

**3.** Toners selon la revendication 1, caractérisés en ce qu'ils contiennent, en tant qu'agent colorant, un colorant de formule Ib

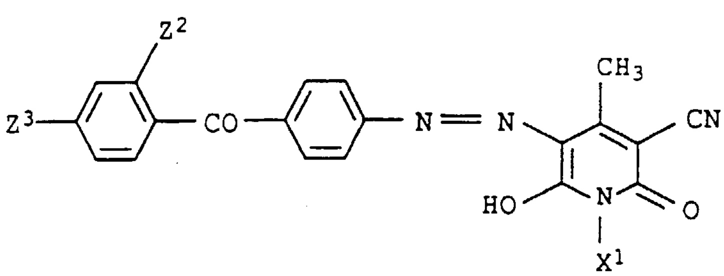

(Ib)

dans laquelle $Z^2$ représente un atome d'hydrogène ou un groupement alkyle en $C_1$-$C_4$ et $Z^3$ représente un groupement alkyle en $C_1$-$C_4$ et $X^1$ prend la signification donnée dans la revendication 1.

**4.** Toners selon la revendication 1, caractérisés en ce qu'ils contiennent, en tant qu'agent colorant, un colorant de formule Ic

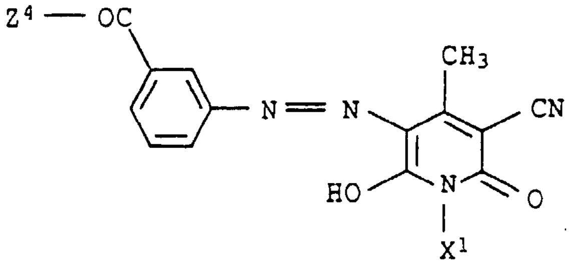

(Ic)

dans laquelle $Z^4$ représente un groupement phénoxyalcoxy(en $C_2$-$C_4$) et $X^1$ prend la signification donnée dans la revendication 1.

**5.** Toners selon la revendication 1, caractérisés en ce qu'ils contiennent, en tant qu'agent colorant, un composé de formule Id, ou bien un mélange de composés de formules Id et Ie

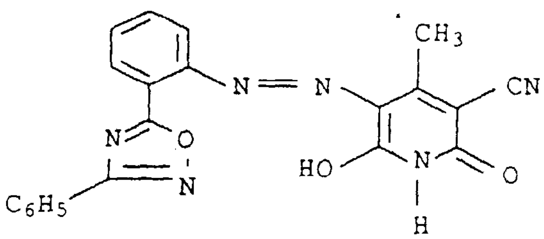

(Id),

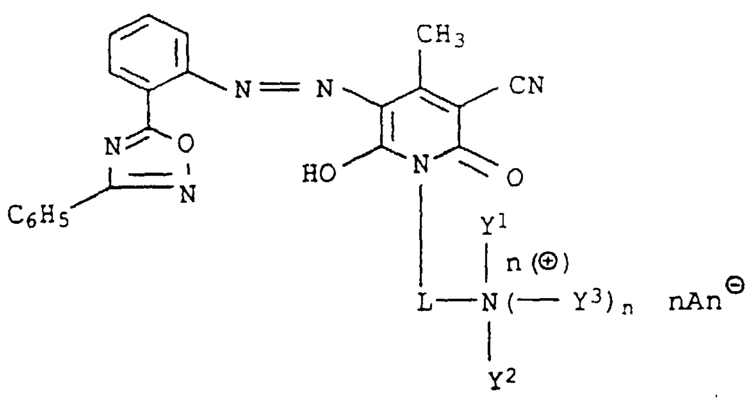

(Ie)

dans lesquelles $An^{\ominus}$ prend la signification donnée dans la revendication 1, n est mis pour 0 ou 1 et L est mis pour un groupement alkylène en $C_2$-$C_4$, où lorsque n vaut 0, $Y^1$ est un atome d'hydrogène et $Y^2$ un groupement alkyle en $C_1$-$C_6$ et, lorsque n vaut 1, $Y^1$, $Y^2$ et $Y^3$ sont chacun indépendamment les uns des autres un groupement alkyle en $C_1$-$C_4$.

**6.** Toners selon la revendication 1, caractérisés en ce qu'ils contiennent, en tant qu'agent colorant, un pigment de formule IIa ou un mélange de pigments de formules IIa et IIb

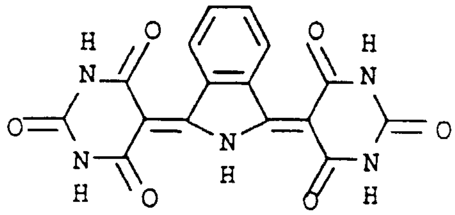

(IIa),

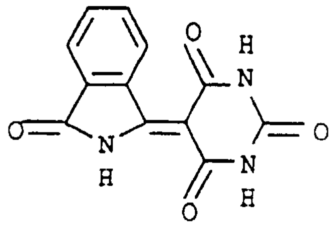

(IIb)

.

**7.** Toners selon la revendication 1, caractérisés en ce qu'ils contiennent 0,1 à 10 % en poids d'agent colorant, par rapport au poids du liant polymère.